(19) Europäisches Patentamt

European Patent Office

Office européen des brevets

(11) **EP 4 001 365 A1**

(12) **EUROPÄISCHE PATENTANMELDUNG**

(43) Veröffentlichungstag:
**25.05.2022 Patentblatt 2022/21**

(21) Anmeldenummer: **20207872.1**

(22) Anmeldetag: **16.11.2020**

(51) Internationale Patentklassifikation (IPC):
**C09D 5/34** (2006.01) **C09D 7/63** (2018.01)
**C04B 28/00** (2006.01)

(52) Gemeinsame Patentklassifikation (CPC):
(C-Sets verfügbar)
**C09D 5/34; C04B 26/04; C04B 26/06; C09D 7/63;**
C04B 2111/00482 (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **DAW SE**
**64372 Ober-Ramstadt (DE)**

(72) Erfinder:
• **BARTEL, Matthias**
**33824 Werther (DE)**

• **MORGRET, Matthias**
**32139 Spenge (DE)**
• **Die weiteren Erfinder haben auf ihr Recht verzichtet, als solche bekannt gemacht zu werden.**

(74) Vertreter: **Metten, Karl-Heinz**
**Boehmert & Boehmert**
**Anwaltspartnerschaft mbB**
**Pettenkoferstrasse 22**
**80336 München (DE)**

(54) **IM WESENTLICHEN KONSERVIERUNGSMITTELFREIE PASTÖSE BESCHICHTUNGSMASSE, INSBESONDERE PUTZ- ODER SPACHTELMASSE, UND DEREN VERWENDUNG SOWIE BESCHICHTUNG ERHÄLTLICH AUS DER BESCHICHTUNGSMASSE, SUBSTRAT ENTHALTEND DIE BESCHICHTUNG UND BESCHICHTUNGSVERFAHREN**

(57) Die vorliegende Erfindung betrifft eine im Wesentlichen konservierungsmittelfreie pastöse Beschichtungsmasse, enthaltend einen Füllstoff, ein Netz- oder Dispergiermittel, einen Verdicker, eine wasserlösliche siliziumhaltige Verbindung, ein organisches Bindemittel, ein Additiv und Wasser, wobei die Beschichtungsmasse einen pH-Wert im Bereich von größer 10 bis kleiner 12 und eine Viskosität im Bereich von 0,5 Pa·s bis 3,0 Pa·s aufweist sowie ausgelegt und eingerichtet ist, eine Beschichtung mit einer Pigment/Volumen-Konzentration im Bereich von 85 bis 99% zu liefern. Ferner betrifft die Erfindung eine Beschichtung, erhalten mit der erfindungs- gemäßen Beschichtungsmasse sowie ein beschichtetes Substrat, erhalten durch Behandeln eines Substrats mit der erfindungsgemäßen Beschichtungsmasse. Außerdem betrifft die Erfindung die Verwendung der erfindungsgemäßen Beschichtungsmasse für die Beschichtung von Substratoberflächen und für die Renovierung von Gebäudefassaden und Innenräumen sowie als Putz- oder Spachtelmasse. Schließlich betrifft die Erfindung ein Verfahren zur Beschichtung von Substratoberflächen, umfassend das Beaufschlagen einer beschichtbaren Oberfläche eines Substrats mit der erfindungsgemäßen wässrigen Beschichtungsmasse.

EP 4 001 365 A1

**(Forts. nächste Seite)**

(52) Gemeinsame Patentklassifikation (CPC): (Forts.)

C-Sets
**C04B 26/04;**
**C04B 26/06**

**Beschreibung**

Die vorliegende Erfindung betrifft eine pastöse wässrige Beschichtungsmasse, insbesondere Spachtel- oder Putzmasse. Des Weiteren betrifft die Erfindung eine Beschichtung für ein Substrat, erhalten oder erhältlich aus der erfindungsgemäßen Beschichtungsmasse, ein Substrat, das mit der erfindungsgemäßen Beschichtung versehen ist, sowie die Verwendung der erfindungsgemäßen Beschichtungsmasse für die Anbringung auf einer Gebäudewand oder Gebäudedecke, insbesondere im Innenbereich.

Beschichtungsmassen finden in den verschiedensten Formen Verwendung und sind sowohl für den Innen- als auch für den Außeneinsatz bekannt. Insbesondere für Innenanwendungen werden als Beschichtungsmassen häufig sogenannte Spachtel- und Putzmassen eingesetzt, beispielsweise um Wandflächen vor der weiteren Bearbeitung optimal einzuebnen. Eine bekannte Problemstellung ist es, dass die Haftung dieser Beschichtungsmassen zu den zu bearbeitenden Untergründen nicht immer den gewünschten Anforderungen genügt. Dies betrifft vor allem biozidfreie Spachtelmassen.

Der vorliegenden Erfindung hat daher die Aufgabe zugrunde gelegen, eine Beschichtungsmasse bereitzustellen, welche nicht mit den geschilderten Nachteilen des Stands der Technik behaftet ist und die dauerhaft vor Verkeimung geschützt ist, und zwar auch ohne den Einsatz herkömmlicher organischer Biozide, und vorzugsweise zudem unproblematisch auch in Innenräumen anwendbar ist. Eine weitere bevorzugte Aufgabe ist es, eine Beschichtungsmasse bereitzustellen, die sich einfach und zuverlässig anbringen lässt. Auch hat der vorliegenden Erfindung vorzugsweise die Aufgabe zugrunde gelegen, solche Beschichtungsmassen zur Verfügung zu stellen, die Beschichtungen liefern, welche effizient geschliffen und/oder gefilzt werden können.

Demgemäß wurde eine im Wesentlichen konservierungsmittelfreie, insbesondere eine konservierungsmittelfreie, pastöse Beschichtungsmasse, insbesondere Putz- oder Spachtelmasse, gefunden, enthaltend

a) mindestens einen Füllstoff,

b) mindestens ein Netz- und/oder Dispergiermittel,

c) mindestens einen Verdicker,

d) mindestens eine wasserlösliche siliziumhaltige Verbindung ausgewählt aus der Gruppe bestehend aus Alkylalkoxysilanen, Alkylalkoxysiloxanen, Alkalialkylsilikonaten, insbesondere Kaliummethylsilikonat, Monoalkylsilantriolen, Dialkylsilandiolen, Trialkylsilanolen, Alkalisalzen von Monoalkylsilantriol, insbesondere Kaliummethylsilantriolat und/oder Kaliumethylsilantriolat, Dialkylsilandiol oder Trialkylsilanol, oder beliebigen Mischungen hiervon,

e) mindestens ein organisches Bindemittel und

f) mindestens ein Additiv und

g) Wasser sowie

h) gegebenenfalls mindestens ein Fasermaterial und/oder

i) gegebenenfalls mindestens ein Pigment,
wobei die Beschichtungsmasse einen pH-Wert im Bereich von größer 10 bis kleiner 12, insbesondere im Bereich von 10,5 bis 11,9 aufweist, ermittelt gemäß DIN 55659-1:2012-1 bei einer Temperatur von 23 $\pm$ 2 °C, oder auf einen pH-Wert im Bereich von größer 10 bis kleiner 12, insbesondere im Bereich von 10,5 bis 11,9 eingestellt ist, wobei die Beschichtungsmasse eine Pigment/Volumen-Konzentration im Bereich von 85 bis 99 %, bevorzugt 88 bis 98,5 % und besonders bevorzugt 90 bis 98,0 %, aufweist und
wobei die Beschichtungsmasse eine Viskosität im Bereich von 0,5 Pa·s bis 3,0 Pa·s, gemessen bei einer Temperatur von 23 $\pm$ 0,20 °C und einer Scherrate von 100 s$^{-1}$ mit dem Messbecher Z2 DIN mit einem Durchmesser von 45 mm, aufweist und/oder
wobei die Beschichtungsmasse, die bei einer Temperatur von 23 $\pm$ 0,20 °C einer innerhalb von 100 sec stetig ansteigenden Scherrate von 0,01 bis 100 s$^{-1}$, anschließend für die Dauer von 150 sec einer Scherrate von 100 s$^{-1}$ und abschließend einer innerhalb von 100 sec stetig abfallenden Scherrate von 100 bis 0,01 s$^{-1}$ ausgesetzt wurde, in Bezug auf die Messpunkte bei Erreichen der Scherrate von 100 s$^{-1}$ und bei Verlassen der Scherrate von 100 s$^{-1}$ eine Viskositätsdifferenz von maximal 0,3 Pa·s, vorzugsweise von maximal 0,2 Pa·s und besonders bevorzugt von maximal 0,15 Pa·s, aufweist.

Die erfindungsgemäße Beschichtungsmasse, insbesondere Spachtel- oder Putzmasse, liegt in pastöser Form bzw. als pastöse Masse vor. Unter einer pastösen Masse wird im Sinne der Erfindung soll ein Feststoff-Flüssigkeitsgemisch, vorzugsweise mit einem hohen Gehalt an Festkörpern, verstanden werden, so dass die pastöse Masse nach Applikation an einer vertikalen Wandfläche nicht mehr frei abfließt, sondern gezielt verstrichen werden kann, vorzugsweise streichfest ist.

Vorzugsweise weist die erfindungsgemäße pastöse Beschichtungsmasse, insbesondere Spachtel- oder Putzmasse, eine Viskosität im Bereich von 0,8 Pa·s bis 2,5 Pa·s und bevorzugt im Bereich von 1,0 Pa·s bis 2,0 Pa·s auf, jeweils gemessen bei einer Temperatur von 23 ±0,20 °C und einer Scherrate von 100 s⁻¹ mit dem Messbecher Z2 DIN mit einem Durchmesser von 45 mm.

Das Viskositäts- bzw. Rheologie-Verhalten der erfindungsgemäßen Beschichtungsmassen kann in einer geeigneten Ausgestaltung mittels eines Rotationsrheometers bestimmt werden. Die Viskositäten $\eta$ der erfindungsgemäßen Beschichtungsmassen sind dabei gemäß DIN 53019 (Ausgabe 05/1980) zu ermitteln. Diese Viskositäten $\eta$ lassen sich z.B. mit dem Rotationsrheometer Physika Rheolab MC 1 der Firma Anton Paar unter Verwendung der Software US200/32 V2.50 bestimmen. Um vergleichbare Ergebnisse zu erhalten, sollten die Messungen bei konstanter Raumtemperatur, beispielsweise bei 23 °C ±0,20 °C vorgenommen werden. Im Allgemeinen reicht es aus, eine Rotationsrampe von 0,01 bis 100 1/s im Zeitraum von 100 s zu fahren. Hierbei wird die Messung derart vorgenommen, dass zunächst für 600 s das Messsystem temperiert wird, anschließend über 100 s die Rotationsgeschwindigkeit von 0,01 auf 100 1/s gesteigert, sodann für 150 s bei der Rotationsgeschwindigkeit von 100 1/s gehalten und abschließend für weitere 100 s die Rotationsgeschwindigkeit von 100 auf 0,01 1/s zurückgefahren wird. Die Viskosität $\eta$ der erfindungsgemäßen Beschichtungsmasse wird dabei aus dem zweiten Segment (konstante Umdrehungszahl) bei 100 1/s in der Weise ermittelt, dass der Mittelwert genommen wird aus dem Messpunkt bei Erreichen der Scherrate von 100 s⁻¹ und dem Messpunkt bei Verlassen der Scherrate von 100 s⁻¹. Form und Material bzw. die Messgeometrie der Messapparatur bzw. des Rotors basieren zweckmäßigerweise auf der Spezifikation Z2DIN

Die der Erfindung zugrunde liegende Aufgabe bzw. die zugrunde liegenden Aufgaben werden besonders zufriedenstellend auch durch solche erfindungsgemäßen Beschichtungsmassen, insbesondere Spachtelmassen, gelöst, die bei einer Temperatur von 23 °C einer innerhalb von 100 sec stetig ansteigenden Scherrate von 0,01 bis 100 s⁻¹, anschließend für die Dauer von 150 sec einer Scherrate von 100 s⁻¹ und abschließend einer innerhalb von 100 sec stetig abfallenden Scherrate von 100 bis 0,01 s⁻¹ ausgesetzt wurden, und die in Bezug auf die Messpunkte bei Erreichen der Scherrate von 100 s⁻¹ und bei Verlassen der Scherrate von 100 s⁻¹ eine Viskositätsdifferenz von maximal 0,3 Pa·s, vorzugsweise von maximal 0,2 Pa·s und besonders bevorzugt von maximal 0,15 Pa·s, aufweisen.

Die erfindungsgemäßen pastösen Beschichtungsmassen sind alkalisch eingestellt und verfügen über einen pH-Wert im Bereich von größer 10 bis kleiner 12, insbesondere im Bereich von 10,5 bis 11,9. Der pH-Wert der erfindungsgemäßen Beschichtungsmassen wird dabei ermittelt gemäß DIN 55659-1:2012-1 bei einer Temperatur von 23 ± 2 °C. Hierfür können pH-Elektroden mit Glasmembran verwendet werden. Ein geeignetes pH-Meter ist zum Beispiel das Messgerät SevenEasy (Meßbereich pH 0,00-14,00) der Firma Mettler Toledo unter Verwendung der Elektrode InLab ExpertPro (Best.-Nr.: 51343101), ebenfalls von der Firma Mettler Toledo.

Es wurde überraschend gefunden, dass sich mit den erfindungsgemäßen Beschichtungsmassen, und zwar insbesondere mit Spachtel- und/oder Putzmassen, die die mindestens eine wasserlösliche siliziumhaltige Verbindung ausgewählt aus der Gruppe bestehend aus Alkylalkoxysilanen, Alkylalkoxysiloxanen, Alkalialkylsilikonaten, insbesondere Kaliummethylsilikonat, Monoalkylsilantriolen, Dialkylsilandiolen, Trialkylsilanolen, Alkalisalzen von Monoalkylsilantriol, insbesondere Kaliummethylsilantriolat und/oder Kaliumethylsilantriolat, Dialkylsilandiol oder Trialkylsilanol, oder beliebigen Mischungen hiervon, enthalten, über einen besonders langen Zeitraum ein stabiler alkalischer pH-Wert aufrechterhalten lässt, der mit einer bioziden Wirkung, insbesondere mit einer, verbunden ist. Es hat sich gezeigt, dass die biozide Langzeitwirkung gegenüber sonst identischen erfindungsgemäßen Beschichtungsmassen nochmals verbessert ist.

Die erfindungsgemäßen Beschichtungsmassen, insbesondere in Form von Putzmassen, umfassen im Allgemeinen ferner 1) mindestens ein Körnungsmaterial.

Auch können die erfindungsgemäßen Beschichtungsmassen mit j) mindestens einem unmodifizierten Schichtsilikat, insbesondere Talkum, und/oder k) mindestens einem modifizierten Schichtsilikat, insbesondere modifiziertes Bentonit, ausgestattet sein. Modifizierte Schichtsilikate können dabei organisch modifizierte Schichtsilikate darstellen. Geeignete organisch modifizierte Schichtsilikat-Verdicker basieren dabei zum Beispiel auf Bentoniten oder Hectoriten, wobei organisch modifizierte Bentonit-basierte Schichtsilikate besonders bevorzugt sind.

Die Füllstoffe weisen in den erfindungsgemäßen Beschichtungsmassen bevorzugt eine Partikelgröße im Bereich von 0,1 bis 500 $\mu$m, bevorzugt Bereich von 4 bis 300 $\mu$m, auf, bestimmt gemäß DIN EN 933-10:2009-10.

Für die erfindungsgemäßen Beschichtungsmassen wird für die Füllstoffe (Komponente a)) bevorzugt auf calcitische Füllstoffe, bevorzugt Calciumcarbonat und/oder Magnesiumcarbonat, zurückgegriffen werden. Alternativ sowie insbesondere zusätzlich können auch silikatische Füllstoffe, insbesondere Talk, eingesetzt werden. Neben einer Mischung aus Calciumcarbonat und Magnesiumcarbonat kann ebenfalls bevorzugt ausschließlich auf Calciumcarbonat als Füllstoff zurückgegriffen werden. In einer weiteren bevorzugten Ausgestaltung ist es vorgesehen, dass die erfindungsgemäße Beschichtungsmasse keine silikatischen Füllstoffe umfasst oder nicht mehr als 2 Gew.-%. Füllststoffe im Sinne der Erfindung umfassen auch Leichtfüllstoffe wie Vermiculit, Bims, Obsidian, Flugasche und deren beliebige Mischungen.

Als Verdicker c) enthalten die erfindungsgemäßen Beschichtungsmassen insbesondere Hydroxyalkylcellulose. Bevorzugt wird für die Verbindungen der Komponente c) zurückgegriffen auf Hydroxyethylmethylcellulose, Hydroxypropylmethylcellulose, Ethylhydroxyethylcellulose, Hydroxyethylcellulose, Hydroxypropylcellulose oder deren beliebige Mischungen, wobei Hydroxyethylcellulose besonders bevorzugt ist.

Zusätzlich können auch hydrophob modifizierte Hydroxycelluloseether eingesetzt werden, z.B. solche, die über Alkyl-Seitenketten mit mehr als zwei C-Atomen verfügen. Besonders geeignete hydrophob modifizierte Hydroxycelluloseether bestehen aus oder umfassen Hydroxyalkylcelluloseether, insbesondere Hydroxyethylcelluloseether und/oder Hydroxypropylcelluloseether.

Darüber hinaus können die erfindungsgemäßen pastösen Beschichtungsmasse als Verdicker alternativ oder zusätzlich auch Polyacrylat-Verdicker, Polyurethan-Verdicker, Polyharnstoff-Verdicker, Polyvinylalkohol-Verdicker, Polyetherpolyol-Verdicker, Schichtsilikat-Verdicker, insbesondere nicht organisch modifizierte Schichtsilikat-Verdicker, bevorzugt Bentonite oder auf Basis von Bentoniten, Stärkeether-Verdicker, Polysaccharid-Verdicker oder deren beliebige Mischungen umfassen. Besonders bevorzugt wird unter diesen weiteren Verdickern auf Xanthan und/oder Fettalkoholethoxylat-Verdicker zurückgegriffen, wobei Fettalkoholethoxylat-Verdicker besonders bevorzugt sind.

Für das Netz- und Dispergiermittel greift man bevorzugt auf solche zurück, ausgewählt aus der Gruppe bestehend aus Alkalimetallsalzen von Acrylsäurepolymeren, insbesondere Natriumpolyacrylate, Ammoniumsalzen von Acrylsäurepolymeren, insbesondere Ammoniumpolymetaacrylate und/oder Ammoniumpolyacrylate, Alkalimetallsalzen von Maleinsäureanhydrid(co)polymeren, Ammoniumsalzen von Maleinsäureanhydrid(co)polymeren, Polyacrylsäuren, Natriumdodecylbenzolsulfonat, Cetyltrimethylammoniumbromid, Natriumpolyphosphaten, Kaliumpolyphosphaten, Ammoniumpolyphosphaten, Polyphosphonaten und beliebigen Mischungen hiervon. Besonders bevorzugt sind hierbei Natriumpolyacrylate.

Die wasserlösliche siliziumhaltige Verbindung d) umfasst bevorzugt ein wasserlösliches Alkylsilikonat oder stellt ein solches dar, wobei Kaliummethylsilikonat besonders bevorzugt ist.

Die erfindungsgemäßen Beschichtungsmassen enthalten darüber hinaus auch Additive. Hierfür kann regelmäßig auf herkömmliche Additive zurückgegriffen werden. Exemplarisch seien Stabilisatoren, Entschäumer, Hydrophobierungsmittel, Mattierungsmittel, Oberflächenadditive, insbesondere Silikonoberflächenadditive, Puffersubstanzen, Neutralisationsmittel und beliebige Mischungen dieser Verbindungen genannt. Die erfindungsgemäßen Beschichtungsmassen enthalten dabei im Allgemeinen mindestens einen Entschäumer als Additivkomponente.

Die erfindungsgemäßen Beschichtungsmassen sind ferner mit mindestens einem organischen Bindemittel (Komponente f)) ausgestattet. Dies liegt regelmäßig in Form einer wässrigen Polymerdispersion vor bzw. wir in dieser Form eingesetzt. Besonders geeignete organische Bindemittel in Form einer wässrigen Polymerdispersion basieren auf Homo-und/oder Copolymeren enthaltend Acrylate, Methacrylate, Vinylacetat und/oder Styrol. Bevorzugt wird hierbei auf Copolymere auf Basis von Vinylacetat und Ethylen oder auf Copolymere auf Basis von Styrol und Acrylaten zurückgegriffen, wobei Copolymere auf Basis von Vinylacetat und Ethylen besonders bevorzugt sind.

Besonders zweckmäßig sind auch solche erfindungsgemäßen pastösen Beschichtungsmassen, insbesondere Spachtelmassen, enthaltend

15 bis 80 Gew.-%, bevorzugt 20 bis 75 Gew.-% und besonders bevorzugt 25 bis 70 Gew.-%, an dem mindestens einen Füllstoff a),

0,001 bis 1,0 Gew.-%, bevorzugt 0,005 bis 0,5 Gew.-% und besonders bevorzugt 0,01 bis 0,25 Gew.-%, an dem mindestens einen Netz- und/oder Dispergiermittel b),

0,05 bis 5,0 Gew.-%, bevorzugt 0,1 bis 2,0 Gew.-% und besonders bevorzugt 0,2 bis 1,5 Gew.-%, an dem mindestens einen Verdicker c),

0,01 bis 4,0 Gew.-%, bevorzugt 0,05 bis 2,0 Gew.-% und besonders bevorzugt 0,1 bis 1,0 Gew.-%, an dem mindestens einen wasserlöslichen Alkylsilikonat d),

0,1 bis 15,0 Gew.-%, bevorzugt 0,2 bis 12,5 Gew.-% und besonders bevorzugt 0,5 bis 8,0 Gew.-%, (jeweils Feststoffanteil) an dem mindestens einen organischen Bindemittel e),

0,01 bis 2,0 Gew.-%, bevorzugt 0,02 bis 1,5 Gew.-% und besonders bevorzugt 0,03 bis 1,0 Gew.-%, an dem mindestens einen Additiv f),

5 bis 50 Gew.-%, bevorzugt 7 bis 40 Gew.-% und besonders bevorzugt 10 bis 35 Gew.-%, Wasser g),

0 bis 3,0 Gew.-%, bevorzugt 0,05 bis 2,5 Gew.-% und besonders bevorzugt 0,1 bis 2,0 Gew.-%, an den mindestens einen Fasern h),

0 bis 15 Gew.-%, bevorzugt 0,05 bis 10 Gew.-% und besonders bevorzugt 0,1 bis 8,0 Gew.-%, an dem mindestens einen Pigment i),

0 bis 15 Gew.-%, bevorzugt 2 bis 12,5 Gew.-% und besonders bevorzugt 5 bis 10 Gew.-%, an dem mindestens einen unmodifizierten Schichtsilikat j),

0 bis 3,0 Gew.-%, bevorzugt 0,05 bis 2,5 Gew.-% und besonders bevorzugt 0,1 bis 2,0 Gew.-%, an dem mindestens einen modifizierten Schichtsilikat k),

wobei die die Beschichtungsmasse bildenden Komponenten sich jeweils zu 100,0 Gew.-% addieren.

Erfindungsgemäß sind auch solche Beschichtungsmassen besonders vorteilhaft, die im Wesentlichen frei von Topfkonservierungsmitteln und/oder im Wesentlichen frei von Filmkonversionsmitteln sowie besonders bevorzugt frei von jeglichen organischen Konservierungsmitteln sind. Diese bevorzugten erfindungsgemäßen Beschichtungsmassen verfügen daher nicht über organische Biozide, insbesondere nicht über Topfkonservierungsmittel. Vorzugsweise ist die erfindungsgemäße Beschichtungsmasse frei von jeglichen Topfkonservierungsmitteln, bevorzugt auch solchen, deren Wirkung nicht ausschließlich auf einer Änderung des pH-Werts basiert. Eine erfindungsgemäße Beschichtungsmasse ist im Sinne der Erfindung auch dann als im Wesentlichen frei von organischen Bioziden, insbesondere Topfkonservierungsmitteln, anzusehen, wenn für deren Herstellung auf handelsübliche Komponenten zurückgegriffen wird, deren Lieferformen organische Biozide, insbesondere Topfkonservierungsmittel, beinhalten. Die erfindungsgemäßen Beschichtungsmassen sind insbesondere dann als im Wesentlichen frei an organischen Bioziden bzw. organischen Konservierungsmitteln zu betrachten, wenn nach Maßgabe der "Vergabegrundlage für Umweltzeichen" der RAL gGmbH für "Emissionsarme Innenwandfarben RAL DE-UZ 102" (Ausg. Januar 2019) keine organischen Biozide oder organischen Konservierungsmittel darin enthalten sind oder, jeweils bezogen auf die Einzelsubstanz einschließlich Formaldehyd, nicht mehr als 2 ppm, ganz besonders bevorzugt nicht mehr als 1,5 ppm, und in Bezug auf 5-Chloro-2-methyl-4-isothiazolin (CIT) weniger als 0,5 ppm sowie in Bezug auf Methylisothiazolinon (MIT) weniger als 1,5 ppm.

Es hat sich überraschenderweise gezeigt, dass die erfindungsgemäße Beschichtungsmasse auf organische Biozide oder sonstige Additive mit biozider Wirkung, insbesondere organische Topfkonservierungsmittel, verzichten kann und trotzdem eine optimale biozide Langzeitwirkung aufweist. Eine biozide Langzeitwirkung im Sinne der vorliegenden Erfindung ist dabei vorzugsweise eine biozide Wirkung, welche mindestens mehrere Monate, vorzugsweise mehrere Jahre anhält. Vorzugsweise ist zumindest eine fungizide Wirkung umfasst.

Die verfügen bevorzugt über keine anorganischen Bindemittel und sind demgemäß insbesondere auch im Wesentlichen frei von Wasserglas und/oder Kieselsol, insbesondere frei von Wasserglas und Kieselsol.

Mit den erfindungsgemäßen Beschichtungsmassen, insbesondere Spachtelmassen, lassen sich Beschichtungen auf Gebäudewänden oder Gebäudedecken, insbesondere im Innenbereich, ohne weiteres anbringen.

Die erfindungsgemäße Beschichtungsmasse stellt bevorzugt eine Spachtelmasse oder eine Putzmasse dar.

Hierbei sind die erfindungsgemäßen Spachtelmassen bevorzugt ausgelegt und eingerichtet, Beschichtungen mit einer Pigment/Volumen-Konzentration im Bereich von 88 bis 99%, bevorzugt im Bereich von 92 bis 99% und besonders bevorzugt im Bereich von 95,0 bis 98,5%, zu liefern.

Hingegen sind die erfindungsgemäßen Putzmassen bevorzugt ausgelegt und eingerichtet, Beschichtungen mit einer Pigment/Volumen-Konzentration im Bereich von 89 bis 98%, bevorzugt im Bereich von 91 bis 97% und besonders bevorzugt im Bereich von 92 bis 96%, zu liefern. Diese erfindungsgemäßen Putzmassen sind in besonders zweckmäßigen Ausgestaltungen mit Körnungsmaterial mit einer Korngröße im Bereich von größer 0,5 mm bis 8 mm, bevorzugt im Bereich von 1,0 mm bis 3,5 mm, jeweils ermittelt durch Siebanalyse gemäß DIN 66165-1:2016-08, ausgestattet.

Die der Erfindung zugrunde liegende Aufgabe wird des Weiteren gelöst durch eine Beschichtung für ein Substrat, erhalten oder erhältlich aus der erfindungsgemäßen Beschichtungsmasse, insbesondere Spachtel- oder Putzmasse. Dabei verfügt die aus der pastösen Spachtelmasse erhaltene Beschichtung vorzugsweise über eine Pigment/Volumen-Konzentration im Bereich von 88 bis 99%, bevorzugt im Bereich von 92 bis 99% und besonders bevorzugt im Bereich von 95,0 bis 98,5%. Die aus der pastösen Putzmasse erhaltene Beschichtung weist demgegenüber vorzugsweise eine Pigment/Volumen-Konzentration im Bereich von 89 bis 98%, bevorzugt im Bereich von 91 bis 97% und besonders bevorzugt im Bereich von 92 bis 96%, auf.

Die Pigment-Volumen-Konzentration PVK der Beschichtungsstoffe kann gemäß der folgenden Formel berechnet werden:

$$PVK\ [\%] = \left( \sum V_{Pigmente} + \sum V_{Füllstoffe} \middle/ \sum V_{Pigmente} + \sum V_{Füllstoffe} + \sum V_{Bindemittel} \right) \times 100.$$

Die der Erfindung zugrunde liegende Aufgabe wird des Weiteren gelöst durch ein beschichtetes Substrat, insbesondere eine beschichtete Innenwand oder -decke, erhalten durch Behandeln des Substrats mit der erfindungsgemäßen pastösen Beschichtungsmasse.

Die erfindungsgemäße pastöse Beschichtungsmasse wird insbesondere in Innenräumen eingesetzt, z.B. für deren Renovierung, kann aber auch für die Renovierung von Gebäudefassaden verwendet werden.

Schließlich wird die der Erfindung zugrunde liegende Aufgabe gelöst durch ein Verfahren zur Beschichtung von Substratoberflächen, insbesondere von Gebäudefassaden und/oder Innenräumen, umfassend die Schritte

i) Zurverfügungstellung einer erfindungsgemäßen wässrigen pastösen Beschichtungsmasse,

ii) Zurverfügungstellung eines Substrats mit einer beschichtbaren Oberfläche und

iii) Beaufschlagen der beschichtbaren Oberfläche des Substrats mit der wässrigen pastösen Beschichtungsmasse.

Hierbei kann die pastöse Beschichtungsmasse mittels einer Rolle, einer Kelle, einem Rakel oder einer Traufe auf die beschichtbare Oberfläche des Substrats aufgebracht werden. Von besonderem Vorteil insbesondere hinsichtlich Anwendungsfreundlichkeit ist auch, dass die erfindungsgemäßen Beschichtungsmassen darüber hinaus auch mit dem Airless-Spritzgerät unproblematisch gleichmäßig aufgetragen werden können.

Es hat sich überraschenderweise gezeigt, dass bei Verwendung der erfindungsgemäßen pastösen Beschichtungsmassen die biozide Langzeitwirkung auch in Innenräumen gewährleistet werden kann, obgleich dort eine vergleichsweise hohe Kohlenstoffdioxidkonzentration üblich ist.

Die erfindungsgemäße Beschichtungsmasse zeichnet sich durch eine hohe Verträglichkeit aus, wobei ein effektiver Langzeitschutz gegen Verkeimung im Gebinde erreicht wird. Überraschenderweise kann auf herkömmliche organische Biozide, insbesondere Topfkonservierungsmittel, gänzlich verzichtet werden. Es hat sich ferner gezeigt, dass einige der möglichen weiteren Inhaltsstoffe den bioziden Langzeitschutz erheblich beeinflussen und verbessern können. Die erfindungsgemäßen Beschichtungsmassen sind demzufolge auch unter Gesundheitsgesichtspunkten für den Nutzer von besonderem Vorteil.

Die erfindungsgemäßen pastösen Beschichtungsmassen sind aufgrund der Möglichkeit, diese konservierungsmittelfrei einsetzen zu können, auch für Allergiker geeignet. Überraschen wurde gefunden, dass die mit den erfindungsgemäßen pastösen Beschichtungsmassen erhältlichen Beschichtungen über eine gute Schleifbarkeit und Filzbarkeit verfügen.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

**Patentansprüche**

1. Im Wesentlichen konservierungsmittelfreie pastöse Beschichtungsmasse, insbesondere Putz- oder Spachtelmasse, enthaltend

   a) mindestens einen Füllstoff,
   b) mindestens ein Netz- und/oder Dispergiermittel,
   c) mindestens einen Verdicker,
   d) mindestens eine wasserlösliche siliziumhaltige Verbindung ausgewählt aus der Gruppe bestehend aus Alkylalkoxysilanen, Alkylalkoxysiloxanen, Alkalialkylsilikonaten, insbesondere Kaliummethylsilikonat, Monoalkylsilantriolen, Dialkylsilandiolen, Trialkylsilanolen, Alkalisalzen von Monoalkylsilantriol, insbesondere Kaliummethylsilantriolat und/oder Kaliumethylsilantriolat, Dialkylsilandiol oder Trialkylsilanol, oder beliebigen Mischungen hiervon,
   e) mindestens ein organisches Bindemittel und
   f) mindestens ein Additiv und
   g) Wasser sowie
   h) gegebenenfalls mindestens ein Fasermaterial und/oder
   i) gegebenenfalls mindestens ein Pigment,
   wobei die Beschichtungsmasse einen pH-Wert im Bereich von größer 10 bis kleiner 12, insbesondere im Bereich von 10,5 bis 11,9 aufweist, ermittelt gemäß DIN 55659-1:2012-1 bei einer Temperatur von 23 $\pm$ 2 °C, oder auf einen pH-Wert im Bereich von größer 10 bis kleiner 12, insbesondere im Bereich von 10,5 bis 11,9 eingestellt ist,
   wobei die Beschichtungsmasse ausgelegt und eingerichtet ist, eine Beschichtung mit einer Pigment/Volumen-Konzentration im Bereich von 85 bis 99%, bevorzugt 88 bis 98,5% und besonders bevorzugt 90 bis 98,0%, zu liefern, und
   wobei die Beschichtungsmasse eine Viskosität im Bereich von 0,5 Pa·s bis 3,0 Pa·s, vorzugsweise im Bereich von 0,8 Pa·s bis 2,5 Pa·s und besonders bevorzugt im Bereich von 1,0 Pa·s bis 2,0 Pa·s, jeweils gemessen bei einer Temperatur von 23 $\pm$0,20 °C und einer Scherrate von 100 s$^{-1}$ mit dem Messbecher Z2 DIN mit einem Durchmesser von 45 mm, aufweist und/oder
   wobei die Beschichtungsmasse, die bei einer Temperatur von 23 $\pm$0,20 °C einer innerhalb von 100 sec stetig ansteigenden Scherrate von 0,01 bis 100 s$^{-1}$, anschließend für die Dauer von 150 sec einer Scherrate von 100

s$^{-1}$ und abschließend einer innerhalb von 100 sec stetig abfallenden Scherrate von 100 bis 0,01 s$^{-1}$ ausgesetzt wurde, in Bezug auf die Messpunkte bei Erreichen der Scherrate von 100 s$^{-1}$ und bei Verlassen der Scherrate von 100 s$^{-1}$ eine Viskositätsdifferenz von maximal 0,3 Pa·s, vorzugsweise von maximal 0,2 Pa·s und besonders bevorzugt von maximal 0,15 Pa·s, aufweist.

2. Beschichtungsmasse nach Anspruch 1, ferner umfassend

    j) mindestens ein unmodifiziertes Schichtsilikat, insbesondere Talkum, und/oder
    k) mindestens ein modifiziertes Schichtsilikat, insbesondere modifiziertes Bentonit.

3. Beschichtungsmasse nach einem der Anspruch 1 oder 2, **dadurch gekennzeichnet, dass**
der Füllstoff eine Partikelgröße im Bereich von 0,1 bis 500 μm, bevorzugt Bereich von 4 bis 300 μm, aufweist, bestimmt gemäß DIN EN 933-10:2009-10.

4. Beschichtungsmasse nach einem der vorangehenden Ansprüche, **dadurch gekennzeichnet, dass**
diese eine Spachtelmasse darstellt.

5. Beschichtungsmasse nach Anspruch 4, **dadurch gekennzeichnet, dass**
die Spachtelmasse ausgelegt und eingerichtet ist, eine Beschichtung mit einer Pigment/Volumen-Konzentration im Bereich von 88 bis 99%, bevorzugt im Bereich von 92 bis 99% und besonders bevorzugt im Bereich von 95,0 bis 98,5%, zu liefern, wobei vorzugsweise der mindestens eine Füllstoff ein Carbonat umfasst oder darstellt.

6. Beschichtungsmasse nach einem der Ansprüche 1 bis 3, **dadurch gekennzeichnet, dass**
diese eine Putzmasse darstellt.

7. Beschichtungsmasse nach Anspruch 6, **dadurch gekennzeichnet, dass**
die Putzmasse ausgelegt und eingerichtet ist, eine Beschichtung mit einer Pigment/Volumen-Konzentration im Bereich von 89 bis 98%, bevorzugt im Bereich von 91 bis 97% und besonders bevorzugt im Bereich von 92 bis 96%, zu liefern.

8. Beschichtungsmasse nach Anspruch 6 oder 7, ferner umfassend
l) mindestens ein Körnungsmaterial,
wobei die Korngröße des Körnungsmaterials vorzugsweise im Bereich von größer 0,5 mm bis 8 mm, bevorzugt im Bereich von 1,0 bis 3,5 mm, liegt, jeweils ermittelt durch Siebanalyse gemäß DIN 66165-1:2016-08.

9. Beschichtungsmasse nach einem der vorangehenden Ansprüche, **dadurch gekennzeichnet, dass**
der mindestens eine Füllstoff a) calcitische Füllstoffe umfasst oder hieraus besteht, insbesondere Calciumcarbonat.

10. Beschichtungsmasse nach einem der vorangehenden Ansprüche, **dadurch gekennzeichnet, dass**
das mindestens ein Fasermaterial h) Cellulosefasern und/oder Glasfasern umfasst oder hieraus besteht.

11. Beschichtungsmasse nach einem der vorangehenden Ansprüche, **dadurch gekennzeichnet, dass**
der mindestens eine Verdicker c) Hydroxyalkylcellulose, insbesondere Hydroxyethylcellulose, umfasst oder hieraus besteht.

12. Beschichtungsmasse nach einem der vorangehenden Ansprüche, **dadurch gekennzeichnet, dass**
das mindestens eine wasserlösliche Alkylsilikonat d) Kaliummethylsilikonat umfasst oder hieraus besteht.

13. Beschichtungsmasse nach einem der vorangehenden Ansprüche, **dadurch gekennzeichnet, dass**
das Additiv f) mindestens einen Entschäumer umfasst.

14. Beschichtungsmasse nach einem der vorangehenden Ansprüche, **dadurch gekennzeichnet, dass**
das organische Bindemittel e) Vinylacetat/Ethylen-Copolymere umfasst oder hieraus besteht.

15. Beschichtungsmasse nach einem der vorangehenden Ansprüche, enthaltend
15 bis 80 Gew.-%, bevorzugt 20 bis 75 Gew.-% und besonders bevorzugt 25 bis 70 Gew.-%, an dem mindestens einen Füllstoff a),
0,001 bis 1,0 Gew.-%, bevorzugt 0,005 bis 0,5 Gew.-% und besonders bevorzugt 0,01 bis 0,25 Gew.-%, an dem mindestens einen Netz- und/oder Dispergiermittel b),

0,05 bis 5,0 Gew.-%, bevorzugt 0,1 bis 2,0 Gew.-% und besonders bevorzugt 0,2 bis 1,5 Gew.-%, an dem mindestens einen Verdicker c),

0,01 bis 4,0 Gew.-%, bevorzugt 0,05 bis 2,0 Gew.-% und besonders bevorzugt 0,1 bis 1,0 Gew.-%, an dem mindestens einen wasserlöslichen Alkylsilikonat d),

0,1 bis 15,0 Gew.-%, bevorzugt 0,2 bis 12,5 Gew.-% und besonders bevorzugt 0,5 bis 8,0 Gew.-%, (jeweils Feststoffanteil) an dem mindestens einen organischen Bindemittel e),

0,01 bis 2,0 Gew.-%, bevorzugt 0,02 bis 1,5 Gew.-% und besonders bevorzugt 0,03 bis 1,0 Gew.-%, an dem mindestens einen Additiv f),

5 bis 50 Gew.-%, bevorzugt 7 bis 40 Gew.-% und besonders bevorzugt 10 bis 35 Gew.-%, Wasser g),

0 bis 3,0 Gew.-%, bevorzugt 0,05 bis 2,5 Gew.-% und besonders bevorzugt 0,1 bis 2,0 Gew.-%, an den mindestens einen Fasern h),

0 bis 15 Gew.-%, bevorzugt 0,05 bis 10 Gew.-% und besonders bevorzugt 0,1 bis 8,0 Gew.-%, an dem mindestens einen Pigment i),

0 bis 15 Gew.-%, bevorzugt 2 bis 12,5 Gew.-% und besonders bevorzugt 5 bis 10 Gew.-%, an dem mindestens einen unmodifizierten Schichtsilikat j),

0 bis 3,0 Gew.-%, bevorzugt 0,05 bis 2,5 Gew.-% und besonders bevorzugt 0,1 bis 2,0 Gew.-%, an dem mindestens einen modifizierten Schichtsilikat k),

wobei die die Beschichtungsmasse bildenden Komponenten sich jeweils zu 100,0 Gew.-% addieren.

16. Beschichtungsmasse nach einem der vorangehenden Ansprüche, **dadurch gekennzeichnet, dass**
diese Beschichtungsmasse Topfkonservierungsmittel und Filmkonservierungsmittel, insbesondere organische Biozide, in Mengen von nicht mehr als 100 ppm, vorzugsweise von nicht mehr als 50 ppm, besonders bevorzugt von nicht mehr als 2 ppm, jeweils bezogen auf die Einzelsubstanz, einschließlich Formaldehyd, und in Bezug auf 5-Chloro-2-methyl-4-isothiazolin (CIT) in Mengen von weniger als 0,5 ppm sowie in Bezug auf Methylisothiazolinon (MIT) weniger als 1,5 ppm, nach Maßgabe der "Vergabegrundlage für Umweltzeichen" der RAL gGmbH für "Emissionsarme Innenwandfarben RAL DE-UZ 102" (Ausgabe Januar 2019), enthalten, und insbesondere in diesen Beschichtungsmassen keine Topfkonservierungsmittel und keine Filmkonservierungsmittel, insbesondere keine organischen Biozide, vorliegen.

17. Beschichtungsmasse nach einem der vorangehenden Ansprüche, **dadurch gekennzeichnet, dass**
diese im Wesentlichen frei von Wasserglas und/oder Kieselsol, insbesondere frei von Wasserglas und Kieselsol, ist.

18. Beschichtung, insbesondere Innenraumbeschichtung, erhalten oder erhältlich mit der pastösen Beschichtungsmasse nach einem der vorangehenden Ansprüche.

19. Beschichtung nach Anspruch 18, **dadurch gekennzeichnet, dass**
die pastöse Beschichtungsmasse eine Spachtelmasse darstellt und dass die Beschichtung eine Pigment/Volumen-Konzentration im Bereich von 88 bis 99%, bevorzugt im Bereich von 92 bis 99% und besonders bevorzugt im Bereich von 95,0 bis 98,5%, aufweist.

20. Beschichtung nach Anspruch 18, **dadurch gekennzeichnet, dass**
die pastöse Beschichtungsmasse eine Putzmasse darstellt und dass die Beschichtung eine Pigment/Volumen-Konzentration im Bereich von 89 bis 98%, bevorzugt im Bereich von 91 bis 97% und besonders bevorzugt im Bereich von 92 bis 96%, aufweist.

21. Beschichtetes Substrat, insbesondere beschichtete Innenwand oder -decke, erhalten durch
Behandeln eines Substrats mit der pastösen Beschichtungsmasse nach einem der Ansprüche 1 bis 17.

22. Verwendung der pastösen Beschichtungsmasse nach einem der Ansprüche 1 bis 17 für die Beschichtung von Substratoberflächen, insbesondere von Innenräumen, für die Renovierung von Gebäudefassaden und/oder Innenräumen, insbesondere von Innenräumen.

23. Verwendung der pastösen Beschichtungsmasse nach einem der Ansprüche 1 bis 17 als Putz- oder Spachtelmasse.

24. Verfahren zur Beschichtung von Substratoberflächen, insbesondere von Gebäudefassaden und/oder Innenräumen, umfassend die Schritte

i) Zurverfügungstellung einer wässrigen pastösen Beschichtungsmasse nach einem der Ansprüche 1 bis 17,

ii) Zurverfügungstellung eines Substrats mit einer beschichtbaren Oberfläche und

iii) Beaufschlagen der beschichtbaren Oberfläche des Substrats mit der wässrigen pastösen Beschichtungsmasse.

25. Verfahren nach Anspruch 24, **dadurch gekennzeichnet, dass** die pastöse Beschichtungsmasse mittels eines Airless-Spritzgeräts, Rolle, Kelle, Rakel oder Traufe auf die beschichtbare Oberfläche des Substrats aufgebracht wird.

**Europäisches Patentamt**
**European Patent Office**
**Office européen des brevets**

## EUROPÄISCHER RECHERCHENBERICHT

Nummer der Anmeldung

EP 20 20 7872

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 3 739 008 A1 (DAW SE [DE]) 18. November 2020 (2020-11-18) * Absatz [0030] * * Absatz [0035] * * Absatz [0046] - Absatz [0046] * * Absatz [0053] - Absatz [0054] * * Ansprüche 1-20 * ----- | 1-25 | INV. C09D5/34 C09D7/63 C04B28/00 |
| X Y | EP 3 498 784 A1 (DAW SE [DE]) 19. Juni 2019 (2019-06-19) * Absatz [0048] * * Absatz [0054] * * Absatz [0058] - Absatz [0059] * * Absatz [0060]; Beispiele 1, 2 * * Ansprüche 1-15 * ----- | 1-25 8 | |
| Y | WO 2011/009874 A1 (BASF SE [DE]; COSYNS AUDREY [DE] ET AL.) 27. Januar 2011 (2011-01-27) * Seite 19, Zeile 41 - Seite 21, Zeile 28 * ----- | 8 | |
| A | DE 10 2016 002221 A1 (BRILLUX GMBH & CO KG [DE]) 31. August 2017 (2017-08-31) * Absatz [0014] - Absatz [0017] * * Absatz [0024] * * Ansprüche 1-15 * ----- | 1-25 | RECHERCHIERTE SACHGEBIETE (IPC) C09D C04B |

Der vorliegende Recherchenbericht wurde für alle Patentansprüche erstellt

| Recherchenort | Abschlußdatum der Recherche | Prüfer |
|---|---|---|
| München | 28. April 2021 | Siemsen, Beatrice |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..........................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 7872

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-04-2021

| Im Recherchenbericht angeführtes Patentdokument | Datum der Veröffentlichung | Mitglied(er) der Patentfamilie | Datum der Veröffentlichung |
|---|---|---|---|
| EP 3739008 A1 | 18-11-2020 | KEINE | |
| EP 3498784 A1 | 19-06-2019 | KEINE | |
| WO 2011009874 A1 | 27-01-2011 | CN 102471632 A | 23-05-2012 |
| | | EP 2456836 A1 | 30-05-2012 |
| | | ES 2562528 T3 | 04-03-2016 |
| | | PT 2456836 E | 30-07-2015 |
| | | US 2012121921 A1 | 17-05-2012 |
| | | WO 2011009874 A1 | 27-01-2011 |
| DE 102016002221 A1 | 31-08-2017 | AU 2017223024 A1 | 13-09-2018 |
| | | AU 2020200681 A1 | 20-02-2020 |
| | | BR 112018017074 A2 | 26-12-2018 |
| | | CA 3015720 A1 | 31-08-2017 |
| | | CN 108779346 A | 09-11-2018 |
| | | DE 102016002221 A1 | 31-08-2017 |
| | | DE 202017107111 U1 | 03-07-2018 |
| | | EP 3420038 A1 | 02-01-2019 |
| | | JP 6714106 B2 | 24-06-2020 |
| | | JP 2019511627 A | 25-04-2019 |
| | | KR 20180117162 A | 26-10-2018 |
| | | RU 2018133547 A | 26-03-2020 |
| | | RU 2020143353 A | 08-02-2021 |
| | | US 2019048214 A1 | 14-02-2019 |
| | | WO 2017144694 A1 | 31-08-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Emissionsarme Innenwandfarben RAL DE-UZ 102. Vergabegrundlage für Umweltzeichen. RAL gGmbH, Januar 2019